Europäisches Patentamt

European Patent Office

Office européen des brevets

(19)

(11) Numéro de publication: **0 342 086**
**A1**

## DEMANDE DE BREVET EUROPEEN

(12)

(21) Numéro de dépôt: **89401165.9**

(22) Date de dépôt: **25.04.89**

(51) Int. Cl.⁴: **A 01 F 15/14**

(30) Priorité: **11.05.88 FR 8806402**

(43) Date de publication de la demande:
**15.11.89 Bulletin 89/46**

(84) Etats contractants désignés: **DE GB NL**

(71) Demandeur: **Collot, Thierry**
**Rue Champy Gondreville la Franche**
**F-45490 Corbielles en Gatinais (FR)**

**Pin, Serge**
**Allée des Pervenches**
**F-45700 Villemandeur (FR)**

(72) Inventeur: **Collot, Thierry**
**Rue Champy Gondreville la Franche**
**F-45490 Corbielles en Gatinais (FR)**

**Pin, Serge**
**Allée des Pervenches**
**F-45700 Villemandeur (FR)**

(74) Mandataire: **Hirsch, Marc-Roger**
**Cabinet Hirsch 34 rue de Bassano**
**F-75008 Paris (FR)**

(54) **Dispositif de contrôle du liage de balles d'un matériau pressé.**

(57) Le dispositif de contrôle du liage de balles 8 de matériau, formées sur une presse équipée d'un système de liage, comporte d'une part un premier doigt 22 de détection de la présence du lien 4 et qui vient se placer au-dessus du lien, à distance de celui-ci de façon telle que le brin horizontal supérieur 4a du lien soit amené à son contact au cours de la formation de la balle 8 et le soulève progressivement, d'autre part un second doigt 20a, 20b de détection de la formation de la boucle de liage, qui vient se placer en position active entre le lien 4 et la balle 8 et qui est susceptible d'être entraîné avec un axe 15 perpendiculaire au déplacement du lien, en position escamotée par le passage du brin vertical arrière 4b de ce dernier, un organe moteur 16, 17, 18, coopérant avec le second doigt 20a, 20b pour le faire passer de sa position escamotée à sa position active, en réponse au soulèvement du premier doigt par le lien 4, et un émetteur de signal 26, 27 étant susceptible d'être excité par la rotation dudit axe 15.

Fig.5

**Description**

## DISPOSITIF DE CONTROLE DU LIAGE DE BALLES D'UN MATERIAU PRESSE

La présente invention concerne un dispositif de contrôle du liage d'un matériau pressé en forme de balle parallélépipédique. Les dispositions de l'invention décrites ci-dessous concernent à titre d'exemple la formation de balles de paille ou de fourrage, mais elles s'appliquent à tout matériau et tout lien.

Dans une presse agricole, le liage est en général réalisé au moment de la formation de la balle, le lien étant préalablement placé à l'entrée du caisson de pressage, entre une aiguille par laquelle le lien est délivré et un dispositif de nouage et il est déplacé au fur et à mesure du pressage de la paille ou du foin dans le caisson. Quand la balle est achevée, le lien s'étend donc pratiquement sur trois côtés de la balle (ses deux faces longitudinales et sa face d'extrémité avant) et l'aiguille ramène l'extrémité initiale du lien vers le dispositif de nouage pour réaliser le dernier côté et achever la boucle en effectuant le noeud.

Il faut rappeler que ces opérations se déroulent à l'arrière d'un tracteur agricole, automatiquement, pendant que l'opérateur conduit le tracteur le long de l'andain à botteler. Il est nécessaire d'indiquer rapidement au conducteur du tracteur, tout défaut pouvant apparaître dans l'opération de bottelage, pour lui éviter de perdre du temps d'une part à botteler des balles qui ne seront pas nouées et, d'autre part, lorsqu'il se rend compte du défaut, à botteler à nouveau les bottes qui n'ont pas été nouées.

Le défaut de bottelage le plus courant provient d'un mauvais fonctionnement du système de fermeture de la boucle par nouage ou par un autre mode de jonction. Un bottelage défectueux provient soit de l'absence de lien dans le système, soit de l'absence de noeud.

Il existe des dispositifs de détection du lien qui ont pour fonction de tester la présence du noeud réalisé et d'émettre un signal de défaut si le noeud est absent ou défait au cours du test. Ces dispositifs comprennent un doigt qui est inséré entre la balle et le lien et qui constitue un obstacle au passage du brin vertical arrière de la boucle, ce doigt étant escamotable si la boucle peut résister à l'effort élastique de maintien du doigt dans la trajectoire du lien. L'introduction de ce doigt sous le lien s'opère, dans les dispositifs connus, de plusieurs manières.

Dans certains dispositifs, le doigt et ses organes de commande appartiennent à l'automatisme de la presse et leur fonctionnement est intégré dans le cycle de fonctionnement de la machine. Ces dispositifs ne peuvent pas être installés séparément sur d'autres presses que celles pour lesquelles ils sont destinés.

Dans d'autres dispositifs, le doigt est profilé de manière à être progressivement surmonté latéralement par le lien, au fur et à mesure de l'avancement de la formation de la balle. Son passage sous le lien est souvent aléatoire car de nombreux facteurs tels que la qualité du lien et l'encrassement des divers organes interdisent un fonctionnement fiable du dispositif de détection de lien.

De toute façon, même en cas de bon fonctionnement de ces dispositifs, le défaut est détecté trop tard, c'est-à-dire à la fin de la confection de la balle, si bien que l'intervention de l'opérateur ne peut prévenir le mauvais fonctionnement que pour les balles suivantes. Il reste, dans ce cas, au moins une balle défectueuse dont la reprise est fastidieuse.

La présente invention a pour but de supprimer ces inconvénients en proposant un dispositif qui permet d'alerter très tôt l'opérateur du mauvais fonctionnement du système de liage, en détectant la présence correcte du lien avant même la confection du noeud. En outre, le dispositif selon l'invention est d'application universelle du fait qu'il est commandé indépendamment du cycle et des automatismes mis en oeuvre sur les presses. En effet, l'énergie nécessaire à son fonctionnement et la commande de ses différentes séquences de fonctionnement sont assurées par la progression de la formation de la balle elle-même, quels que soient les moyens d'actionnement et de puissance employés pour réaliser cette balle. Il peut donc s'adapter à n'importe quelle machine de manière très simple, sans impliquer une modification quelconque du mécanisme propre de la machine.

A cet effet, l'invention a plus précisément pour objet un dispositif de contrôle du liage de balles de matériau tel que paille ou fourrage formées sur une presse agricole équipée d'un système de liage, dans lequel la boucle d'un lien est réalisée autour de la balle au fur et à mesure du pressage du matériau, caractérisé en ce qu'il comporte d'une part un premier doigt de détection de la présence du lien et qui vient se placer au-dessus du lien à une distance de celui-ci telle que le brin horizontal supérieur du lien soit amené à son contact au cours de la formation de la balle et le soulève progressivement, d'autre part un second doigt de détection de la formation de la boucle de liage qui vient se placer en position active entre le lien et la balle et qui est susceptible d'être entraîné avec un axe sensiblement perpendiculaire au lien par le passage du brin vertical arrière de ce dernier, en ce qu'un organe moteur coopère avec le second doigt pour le rappeler de sa position escamotée à sa position active, en réponse au soulèvement du premier doigt par le lien, et en ce qu'un émetteur de signal est susceptible d'être excité en fonction de la rotation dudit axe sous l'effet du déplacement du second doigt, de manière à signaler l'absence ou la rupture du lien au cours de la formation et du nouage de la boucle de liage.

Dans un premier mode de réalisation de l'invention, l'organe moteur est constitué par un moteur à accumulation mécanique d'énergie rechargé par le second doigt lors de son entraînement par le lien.

En outre, le premier doigt coopère avec une butée de retenue du second doigt dans sa position escamotée, dans une position instable de l'organe moteur s'opposant à l'actionnement du second doigt vers sa position active qui correspond à l'état du moteur dans lequel le niveau d'énergie accumulée est le plus faible.

Dans une première variante de ce mode de réalisation, le second doigt est constitué par chacune des extrémités opposées d'un barreau attelé par sa partie médiane à l'extrémité d'un axe entrainé par l'organe moteur qui comporte une lame élastique ou un levier rappelé élastiquement sur deux butées solidaires en rotation de l'axe d'entraînement du barreau et formant chacune une surface de came susceptible de venir en appui sur un levier sollicité par un ressort pour repousser le second doigt en position active, lorsque la butée de retenue est effacée par le premier doigt.

Dans une second variante de réalisation, les premier et second doigts sont confondus en un doigt unique porté par un axe de rotation sur lequel d'une part il est articulé autour d'un axe de basculement perpendiculaire à cet axe de rotation et, d'autre part, est monté un bras d'accouplement opposé au doigt unique et dont un ergot d'extrémité coulisse dans la rainure radiale d'un disque tournant autour d'un axe parallèle à l'axe de rotation du doigt unique et comportant un maneton d'entraînement sur lequel vient en appui un bras sollicité par un organe élastique pour constituer un organe d'entraînement en rotation du disque et le dispositif de contrôle comporte une entrée de retenue sur laquelle est susceptible de venir en appui le doigt unique repoussé par l'ergot d'extrémité sollicité par la rotation du disque tant que le doigt n'est pas pivoté autour de l'axe de basculement par le lien.

Dans ce cas, la butée de retenue est montée de façon élastique de manière à s'effacer partiellement sous l'action du brin vertical arrière du lien sur le doigt, la force élastique de rappel de ladite butée étant cependant supérieure à la force motrice développée par le moteur à accumulation dans la position d'immobilisation du disque par cette butée de retenue.

Dans un second mode de réalisation de l'invention, l'organe moteur est constitué par un moteur alimenté par une source d'énergie extérieure, le premier doigt étant relié à un circuit de commande de ce moteur, apte à placer le second doigt en position active, alors que son escamotage est assuré par le lien, au passage du brin vertical de ce dernier.

Dans un troisième mode de réalisation, l'organe moteur est constitué par une liaison mécanique du premier doigt et du second doigt par l'intermédiaire d'un organe d'accouplement constitué de deux bras respectivement solidaires de l'axe de transmission correspondant du premier et du second doigts et en appui l'un sur l'autre.

Enfin, il sera avantageux que l'émetteur de signal coopère avec un détecteur de l'avancement de la balle dans la presse.

D'autres buts, caractéristiques et avantages apparaîtront à la lecture de la description de divers modes de réalisation de l'invention, faite à titre non limitatif et en regard du dessin annexé, où:

   - les figures 1 à 4 illustrent schématiquement la formation d'une balle de fourrage dans une machine équipée du dispositif selon l'invention;

   - la figure 5 représente schématiquement en perspective un premier mode de réalisation de l'invention;

   - les figures 6 à 9 illustrent par des vues schématiques de dessus, les différentes états du dispositif de la figure 5;

   - les figures 10 et 11 représentent schématiquement en vue de côté et en vue de dessus un second mode de réalisation de l'invention;

   - la figure 12 représente schématiquement et en perspective un troisième mode de réalisation de l'invention;

   - les figures 13 et 14 illustrent schématiquement deux phases du fonctionnement du dispositif de la figure 12.

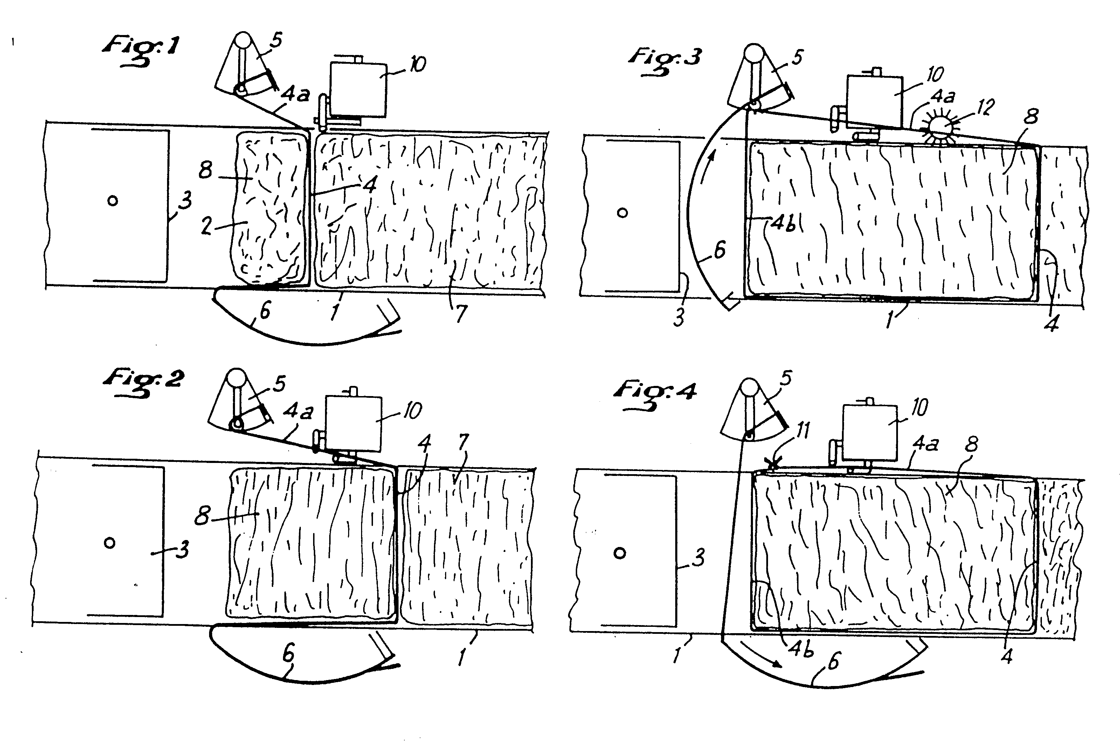

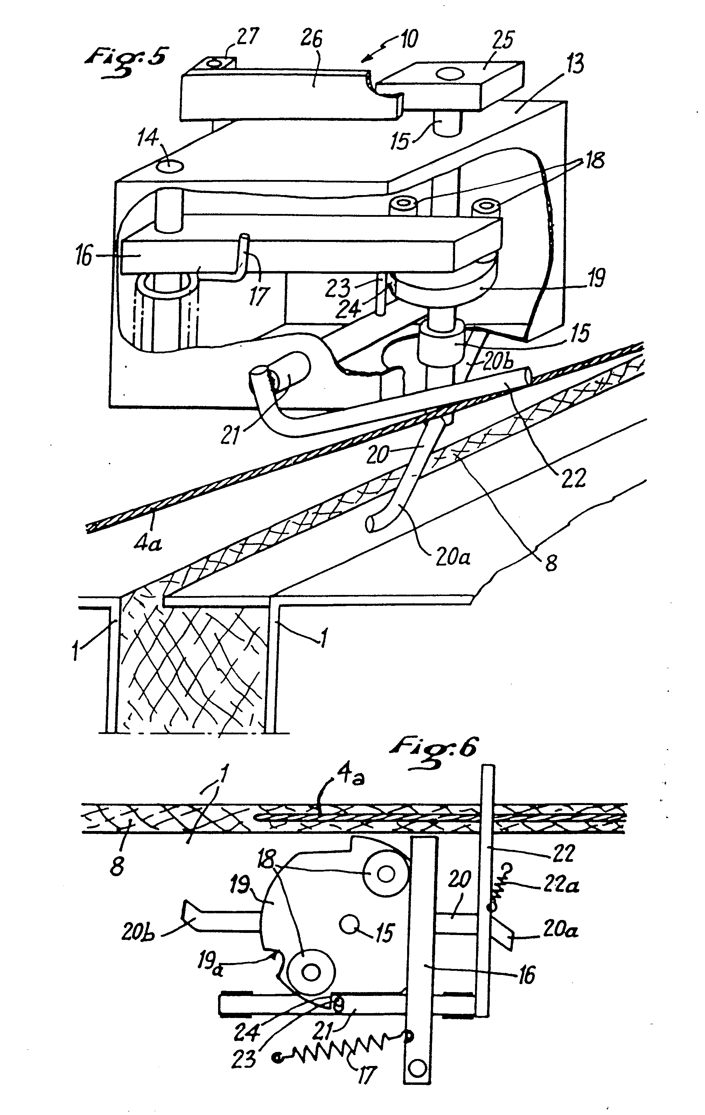

En se reportant d'abord aux figures 1 à 4 on voit, schématiquement représentés, un caisson de presse 1 dans lequel du fourrage ou de la paille 2 est accumulé et pressé par un piston 3. La presse comporte également un dispositif de mise en place d'un lien 4 qui consiste en un dispositif de nouage 5 auquel est fixée l'une des extrémités du lien 4, et une aiguille 6 au travers de laquelle le lien est alimenté. Le dispositif de nouage 5 est placé au-dessus du caisson tandis que l'aiguille 6 est disposée au-dessous de celui-ci.

La figure 1 montre une balle 7 achevée tandis qu'une balle suivante 8 est en cours de constitution. Le fourrage est poussé vers la droite des figures 1 à 4 en entraînant le lien 4 dont le brin supérieur 4a s'étire également vers la droite des figures en passant à proximité du dispositif de détection 10 selon l'invention. Lorsque la balle 8 est achevée, l'aiguille 6 conduit le lien 4 vers le dispositif de nouage 5, où l'extrémité du lien portée par l'aiguille est attachée à l'autre extrémité du lien retenue par le dispositif 5. Après la réalisation du noeud 11, le lien 4 est complètement refermé sur la balle 8 pour présenter un brin vertical arrière 4b. L'aiguille 6 se rétracte sous le caisson 1 après avoir laissé la nouvelle extrémité du lien retenue dans le noeud 5.

On remarque sur les figures 1 à 4 qu'au fur et à mesure de la formation de la balle 8, le brin supérieur 4a du lien 4 s'élève par rapport au dispositif 10 de détection. Ce mouvement relatif, comme on le verra ci-après, est exploité pour la détection du lien. On remarque à la figure 3 un détecteur ou capteur 12 d'avancement de la balle qui émet à sa sortie des signaux indicatifs de la formation de la balle permettant, notamment, de déclencher le basculement de l'aiguille 6 pour procéder au nouage. On pourra utiliser ce capteur pour permettre, avec le détecteur selon l'invention, l'émission d'une information complète (ou d'un signal d'alerte) en direction de la cabine de pilotage du tracteur agricole auquel est attelé la presse.

Sur la figure 5 on reconnaît le caisson 1 dans lequel la balle 8 est en train d'être formée et le brin 4a du lien lacé au voisinage du dispositif 10 de détection. Ce dispositif comporte un boîtier 13 qui peut être fixé au bâti de la presse. Ce boîtier sert de palier à deux axes d'articulation verticaux. L'axe 14 sert d'articulation à un levier 16 qui est sollicité par un ressort de torsion 17 tendant à faire tourner le levier 16 autour de l'axe 14 dans le sens contraire de celui des aiguilles d'une montre.

A son autre extrémité, le levier 16 coopère avec deux butées 18 portées par un disque 19 solidaire en rotation de l'axe 15. Sous ce disque 19, l'axe 15 se prolonge en direction du brin 4a. A son extrémité voisine de ce brin, l'axe 15 porte un barreau 20 formant deux doigts opposés 20a et 20b qui, selon la position angulaire de l'axe 15, viennent se placer parallèlement ou transversalement à la direction du brin 4a et sous ce dernier.

Le boîtier 13 porte également un troisième axe 21 sensiblement orthogonal aux axes 14 et 15, cet axe présentant à son extrémité extérieure au boîtier 13 un levier 22 sensiblement perpendiculaire à l'axe 21 et s'étendant transversalement au brin 4a et au-dessus de lui. Un ergot radial 23, solidaire de l'axe 21, peut venir se loger dans une des deux encoches 24 ménagées à la périphérie du disque 19 et diamétralement opposées. A sa partie supérieure, l'axe 15 est solidaire d'une came 25 qui peut venir actionner la lame mobile 26 d'un contacteur 27 qui constitue un moyen d'émission d'un signal à chaque rotation de l'axe 15.

Sur les figures 6 à 9, les éléments identiques à ceux déjà décrits sont affectés des mêmes signes de référence. Ces figures représentent schématiquement les différentes phases du cycle de fonctionnement du dispositif de détection 10. Sur la figure 6, on voit que le brin 4a est placé sous le levier 22 tandis que l'ergot 23 est venu se loger dans une des encoches 24 du disque 19 pour l'immobiliser en s'opposant à la poussée du levier 16 sollicité par le ressort 17 vers l'une des butées 18. Dans cette position de l'axe 15, les doigts 20a et 20b sont placés de façon sensiblement parallèle au brin 4a du lien 4.

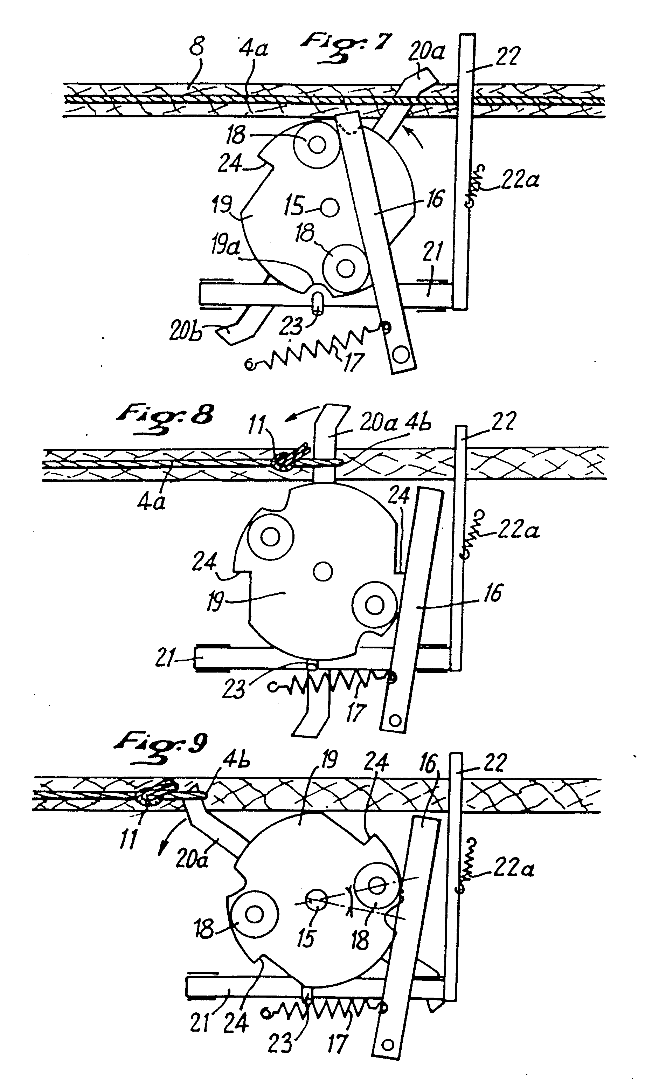

Comme on l'a vu en regard des figures 1 à 4, le brin 4a en s'élevant par rapport au doigt 22, soulève progressivement ce dernier. La butée 23 s'échappe alors de l'encoche 24 et le levier 16 sollicité par le ressort 17 fait tourner le disque 19 et l'axe 15 jusqu'à ce qu'ils occupent la position représentée sur la figure 7. Le doigt 20a vient alors se glisser sous le brin 4a, tandis que l'ergot 23 est maintenu écarté du disque 19 par le lien 4a agissant sur le doigt 22. Dans cette position du disque 19, une encoche 19a permet au doigt 22 de retomber si le lien 4a se casse, et donc d'agir sur un contacteur d'alarme ou tout autre dispositif de signalisation de défaut.

Le noeud 11 ayant été réalisé, le brin arrière 4b de la boucle encerclant la balle 8 entraîne le doigt 20a dans le sens inverse des aiguilles d'une montre (voir la figure 8). Le disque 19 est entraîné dans le même sens et l'une des butées 18 écarte le levier 16 à l'encontre du ressort 17. Entre-temps, du fait que l'extrémité de la balle 8 a dépassé le doigt 22, celui-ci retombe tiré vers le bas par un ressort d'assistance 22a et l'ergot 23 vient en appui contre la périphérie du disque 19.

L'entraînement en rotation du doigt 20a continue jusqu'à ce que le brin 4b s'échappe du doigt 20a (voir figure 9). A ce moment, la butée 18 en contact avec le levier 16 a dépassé le point d'arc-boutement, c'est-à-dire le point où le contact du levier 16 et de la butée 18 est confondu avec le point de tangence du levier 16 à la trajectoire de la butée 18. Dans ces conditions, le levier 16 exerce un couple sur le disque 19 qui continue de tourner dans le sens anti-horaire jusqu'à ce que l'ergot 23 vienne se loger dans une des encoches 24 dans une position symétrique de celle de la figure 6 dans laquelle le levier 16 exerce une poussée sur le disque 19. Lorsque le disque 19 sera libéré par dégagement de l'ergot 23, il tournera dans le sens anti-horaire pour venir placer le doigt 20b sous le brin 4a de la balle suivante qui prend alors sa place sous le doigt 22 et le cycle recommence.

C'est ainsi la présence initiale du brin 4a qui permet une première rotation de l'axe 15 portant le barreau 20 sous l'effet de la sollicitation du ressort 17 et cette rotation peut être enregistrée par le contact 27, grâce à la came 25 et à la lame 26. On peut ensuite exploiter ce signal pour avertir le conducteur que la mise en place du lien se passe correcte ment. La présence d'un brin arrière vertical 4b est ensuite détectée par la seconde rotation de l'axe 15 due à l'entraînement du doigt 20a ou 20b par le brin 4b qui doit présenter une solidité suffisante pour surmonter la réaction du ressort 17 qui s'oppose à la rotation du disque 15. Le choix des caractéristiques de ce ressort fixe ainsi la limite de l'effort auquel on souhaite que la boucle 11 (noeud et lien) résiste. Si le noeud 11 ou le lien 4 se rompt, la rotation de l'axe 15 ne se produira pas et ne sera pas enregistrée par le contacteur 27, ce qui provoquera une alerte. Bien entendu, on peut coupler les signaux émis (ou non-émis) par le capteur 27 avec ceux du détecteur 12 d'avancement de la balle sur une porte ET par exemple pour n'émettre un signal d'alerte que dans la mesure où malgré l'avancement détecté de la balle, la présence du brin 4a et/ou la solidité du noeud ont fait défaut.

L'un des avantages de l'invention réside dans la double détection qui est réalisée pour chaque balle (présence du lien, présence du noeud) car on sait que plus de la moitié des défauts de liage détectés par les dispositifs antérieurs sont en fait constitués par une absence du lien. Selon l'invention, l'absence du lien est détecté bien avant que la balle ne soit achevée et l'on peut intervenir immédiatement sur le lien ou le noeud, ce qui évite d'achever pour rien la balle et d'avoir à reprendre le fourrage non botté. L'invention permet également de tester la solidité du noeud si l'attache est réalisée par nouage.

On remarquera, en outre, que le dispositif qui vient d'être décrit ci-dessus ne fait appel à aucune énergie extérieure pour fonctionner. Le réarmement du moteur à accumulation mécanique d'énergie que constitue le disque 19, les butées 18, le levier 16 et le ressort 17, s'opère en utilisant une partie de l'énergie transmise à la balle de paille pour son évacuation hors de la presse. C'est la traction exercée par le lien qui permet de réarmer le moteur. On a représenté sur le dessin l'émetteur de signal sous la forme d'un contact électrique. On peut, bien entendu, monter à l'extrémité de l'axe 15, tout autre dispositif de signalisation : optique, mécanique ou sonore indiquant au conducteur l'état de marche de la presse.

Dans une variante non représentée du dispositif, on peut accoupler au doigt 22 un contacteur électrique qui actionne un moteur (ou un électro-aimant) agissant sur le barreau 20 pour le placer transversalement au brin afin qu'il soit accroché par celui-ci et qu'il soit ramené à la position d'origine par ce brin (assisté par un ressort, si nécessaire). Dans une autre variante, non représentée, le doigt 22 peut être directement articulé autour d'un axe 21 porté par l'axe 15.

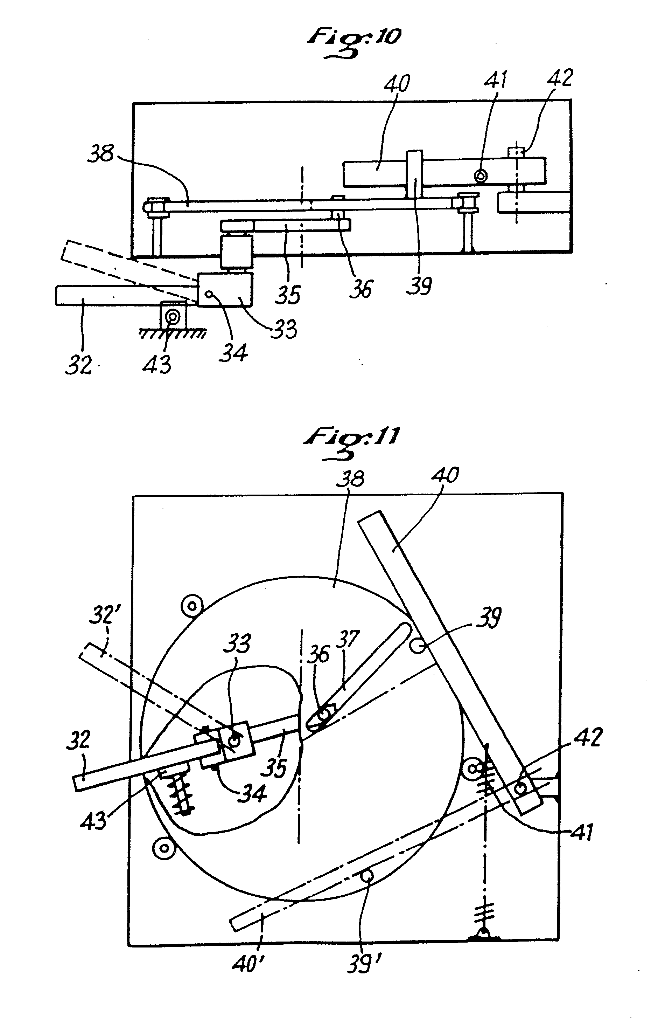

Les figures 10 et 11 représentent schématiquement un autre mode de réalisation du dispositif selon l'invention. Le principe de fonctionnement est sensiblement identique à celui du dispositif représenté sur les figures 5 à 9, à savoir qu'il met en oeuvre un moteur à accumulation mécanique d'énergie, mais que le doigt de détection du brin et le doigt de détection de la boucle (ou du nouage) sont confondus en un seul doigt. On réalise pour cela un système de transmission particulière entre un levier 40 rappelé par un ressort 41 et un doigt unique de détection 32.

Le doigt 32 est porté par un axe 33 dans un palier du boîtier 13 et il est, en outre, articulé à l'axe 33 autour d'un axe de basculement 34 perpendiculaire à l'axe 33. Cette articulation est limitée, car seuls les déplacements vers le haut, à partir d'une position horizontale du doigt 32, sont possibles. A l'opposé du doigt 32 et à l'intérieur du boîtier 13 (le doigt 32 étant extérieur à ce boîtier), l'axe 33 porte un bras d'accouplement 35 muni d'un ergot 36 logé dans la rainure radiale 37 d'un disque 38, tournant dans le boîtier 13 autour d'un axe parallèle à l'axe 33. Le disque 38 comporte un maneton 39 sur lequel vient prendre appui en permanence le levier 40 sollicité par le ressort 41 (remplissant les fonctions du levier 16 et du ressort 17 des figures précédentes).

On comprend que les deux positions du levier 40 tangentes à la trajectoire du maneton 39 définissent deux plages angulaires, l'une recouvrant plus de 180°, à l'opposé du point d'articulation 42 du levier 40 sur le boîtier 13 par rapport au centre du disque 38, et l'autre inférieure à 180° du côté de ce point 42 par rapport au centre du disque. Dans la plus grande de ces plages, le levier repousse le disque 38 dans le sens anti-horaire et le disque 38 peut entraîner le doigt 32 sur plus d'un demi-tour (dans le même sens de rotation) autour de l'axe 33. Dans la plus petite de ces plages, il faut entraîner en rotation le disque 38 à l'encontre de la force de rappel du ressort 41. C'est le doigt 32 qui constitue alors l'élément moteur (sur moins d'un demi-tour).

Une butée 43 située sur la trajectoire du doigt 32 arrête ce doigt au voisinage de la position angulaire qui correspond au maximum d'énergie accumulée dans le ressort 41 lorsque l'action du levier 40 sur le disque 38 engendre un couple moteur dans le sens anti-horaire. Cette butée 43 est escamotable et partiellement élastique pour des raisons qui seront expliquées ci-après.

Au début de la confection d'une nouvelle balle, le lien passe sous le doigt 32, ce dernier étant en appui contre la butée 43. Le lien soulève le doigt 32 autour de son axe 33 ce qui le libère de la butée 43. Le couple exercé par le levier 40 sur le disque 38 provoque une rotation de ce dernier qui, du fait de l'engagement de l'ergot 36 dans la rainure 37, fait tourner le doigt 32 autour de l'axe 33 dans le même sens pour l'amener dans la position 32'. Le levier 40 atteint la position 40' où son action sur le maneton qui est venu dans la position 39' ne produit pas de couple car elle agit alors selon un rayon du disque. Au cours de son passage de la position initiale à la position 32', le doigt 32 s'échappe du contact avec le lien et vient se glisser entre ce dernier et la balle de fourrage. Au passage de l'extrémité de la balle, le doigt 32 est accroché par le lien qui entraîne en rotation le disque 38 à l'encontre de la réaction du levier 40 sollicité par le ressort 42. Le doigt 32 vient alors en appui sur la butée 43 qui s'écrase pour permettre au lien de s'échapper à l'extrémité du doigt 32. Lorsque le lien a quitté cette extrémité, la butée 43 reprend sa position normale, car son effet élastique de rappel est plus important que celui exercé par le ressort 41 sollicitant le levier 40. Le doigt 32 est alors à nouveau placé sur la trajectoire d'un brin 4a du lien, mais cette fois au-dessus de lui et le cycle peut alors recommencer.

On attelle, bien entendu, au disque 38 un organe d'actionnement d'un capteur de déplacement de ce disque et donc du doigt 32. Les signaux de ce capteur peuvent être exploités comme dans le cas précédent.

Comme dans le mode de réalisation précédent, le doigt 32 peut, en variante, agir sur le circuit de commande d'un moteur l'entraînant en rotation pour lui permettre de passer de la position située au-dessus du brin à une position située en-dessous. Cette action du moteur intervient lors du basculement du doigt 32 autour de l'axe 34. Le moteur lui fait exécuter un tour complet jusqu'à la butée 43 dont la résistance à l'écrasement détermine le seuil de résistance et de solidité du noeud.

Le troisième mode de réalisation de l'invention représenté sur les figures 12, 13 et 14 diffère des précédents par le fait que l'organe moteur qui place le second doigt en position active est constitué par le premier doigt lui-même.

Dans le boîtier 13, l'axe 15 porte à sa partie inférieure le second doigt 20 et à sa partie supérieure un doigt 25a qui coopère avec la lame 26 du contacteur 27, de la même manière que la came 25 de la figure 5. L'axe est attelé à un ressort de rappel 50 qui tend à le faire tourner dans le sens des aiguilles d'une montre jusqu'à venir au contact d'une butée non représentée.

Le premier doigt 22 est, comme dans le cas de la figure 5, articulé autour d'un axe 21 perpendiculairement à l'axe 15 pour être soulevé par le brin 4a. La rotation de l'axe 21 à l'encontre du ressort 50 est transmise à l'axe 15, par la coopération de deux doigts ou bras 51 et 52, respectivement solidaires des axes 21 et 15. Cet accouplement peut être réalisé par tout autre moyen approprié (par exemple à renvoi d'angle...).

En partie médiane, l'axe 15 est solidaire d'une barrette 53 qui lui est perpendiculaire et qui entraîne une came 54, pouvant tourner librement par rapport à l'axe 15, au moyen de deux pions 55 et 56. Cette came 54 est circulaire, présente un rayon égal ou légèrement supérieur à la longueur de la barrette 53 et possède un décrochement 57 situé à sa périphérie et tel que, lorsque la barrette est en appui sur le pion 55, son extrémité libre soit en saillie dans le décrochement 57. En appui sur le pion 56, la barrette est située au moins partiellement à l'extérieur du décrochement 57. Une lame de ressort 58, tangente à la came 54, forme une butée pour la barrette 53 lorsque celle-ci est logée dans le décrochement 57. Cette butée est effacée par la came 54 comme on le verra ci-après.

La position d'origine du dispositif est représentée par la figure 13 (éléments en traits pleins). Le doigt 22 est en position basse. Le doigt 20 est dans sa position escamotée en dehors du trajet du brin 4a. Le ressort 50 maintient le doigt 20 dans cette position, c'est-à-dire avec la barrette 53 en appui sur le pion 56 (on suppose que la came 54 est en butée contre un élément du boîtier 13).

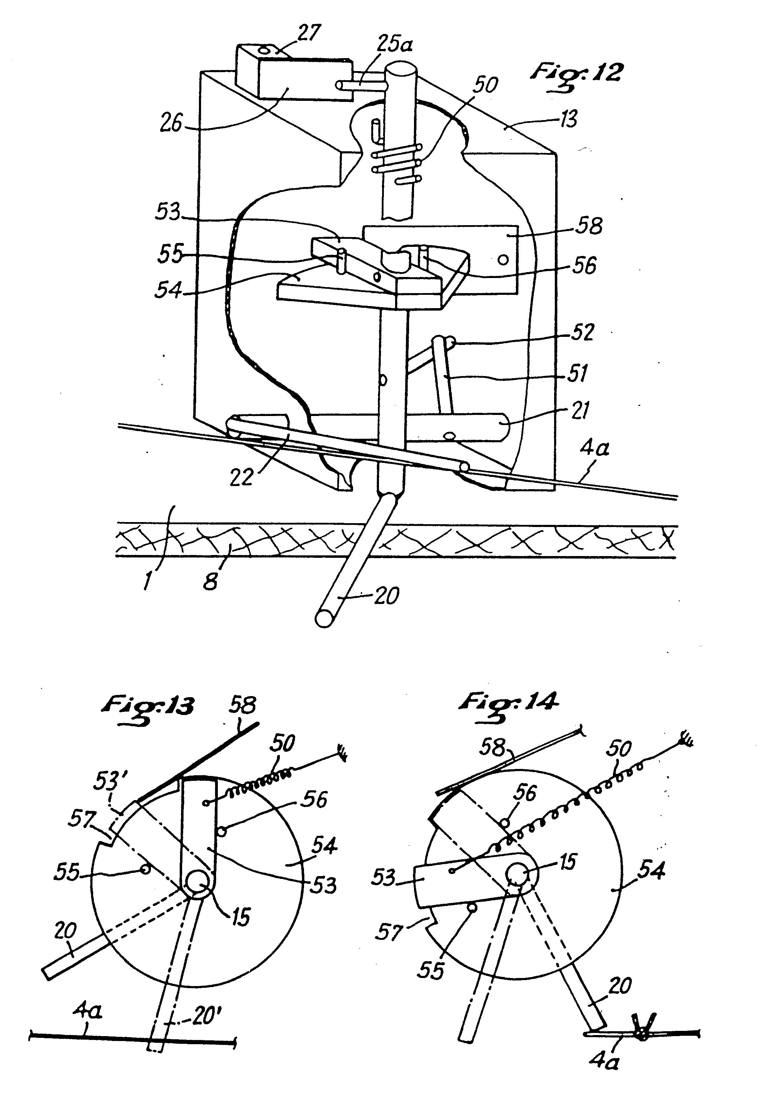

Le doigt 22 est alors soulevé par le brin 4a et le doigt 51 repousse le doigt 52. L'axe 15 et la barrette 53 tournent dans le sens inverse des aiguilles d'une montre. La barrette 53 se déplace vers le décrochement 57 en soulevant la lame 58 jusqu'à dépasser l'extrémité de cette lame (position 53′ en traits mixtes sur la figure 13). Dans cette position, le doigt 51 s'est échappé du contact avec le doigt 52 et peut continuer de pivoter vers le bas si le lien 4a continue de soulever le doigt 22. Le recul de la barrette 53 est empêché par la lame 58 et le doigt 20 est maintenu dans sa position 20′ sous le lien 4a qui entraîne le doigt 20. L'axe 15 et la barrette 53 tournent alors à l'encontre du ressort 50, en entraînant la came 54 par le pion 55 (position représentée en traits pleins sur la figure 14). Le doigt 20 s'échappe alors du contact avec le brin 4a. Le ressort 50 rappelle la barrette 53 contre le pion 56, donc au moins partiellement à l'intérieur du profil de la came 54 qui maintient la lame 58 soulevée (position en traits mixtes sur la figure 14). Puis l'ensemble retourne à la position d'origine. Le doigt 22 retombe en l'absence de brin et le doigt 52 vient à nouveau se placer sous le doigt 51 qui est alors en position haute.

L'invention présente un avantage particulier du fait qu'elle peut être adaptée à toutes les presses existantes, et ce de manière extrêmement simple. Elle permet pour un surcoût peu élevé de la presse d'augmenter le rendement de celle-ci de l'ordre de 5 à 10% en permettant une détection rapide des défauts dont on sait qu'il sont pour une grande part dus à une absence de lien dans le système de liage.

**Revendications**

1.- Dispositif de contrôle du liage de balles de matériau (8) formées sur une presse équipée d'un système de liage dans lequel la boucle d'un lien est réalisée autour de la balle (8) au fur et à mesure du pressage du matériau, caractérisé en ce qu'il comporte d'une part un premier doigt (22) de détection de la présence du lien (4) et qui vient se placer au-dessus du lien, à une distance de celui-ci telle que le brin horizontal supérieur (4a) du lien soit amené à son contact au cours de la formation de la balle (8) et le soulève progressivement, d'autre part un second doigt (20a, 20b) de détection de la formation de la boucle de liage, qui vient se placer en position active entre le lien (4) et la balle (8) et qui est susceptible d'être entraîné avec un axe (15) sensiblement perpendiculaire au lien par le passage du brin vertical arrière (4b) de ce dernier, en ce qu'un organe moteur (16, 17, 18) coopère avec le second doigt (20a, 20b) pour le rappeler de sa position escamotée à sa position active, en réponse au soulèvement du premier doigt (22) par le lien (4), et en ce qu'un émetteur de signal (26, 27) est susceptible d'être excité en fonction de la rotation dudit axe (15) sous l'effet du déplacement du second doigt (20a, 20b), de manière à signaler l'absence ou la rupture du lien (4) au cours de la formation et du nouage de la boucle de liage.

2.- Dispositif selon la revendication 1, caractérisé en ce que l'organe moteur est constitué par un moteur à accumulation mécanique d'énergie rechargé par le second doigt (20a, 20b) lors de son entraînement par le lien (4).

3.- Dispositif selon la revendication 1 et 2, caractérisé en ce que le premier doigt (22) coopère avec une butée (23) de retenue du second doigt (20a, 20b) dans sa position escamotée, dans une position instable (figure 6) de l'organe moteur, s'opposant à l'actionnement du second doigt (20a, 20b), vers sa position active (figure 7) qui correspond à l'état du moteur dans lequel le niveau d'énergie accumulée est le plus faible.

4.- Dispositif selon les revendications 1 à 3, caractérisé en ce que le second doigt (20a, 20b) est constitué par chacune des extrémités opposées d'un barreau (20) attelé par sa partie médiane à l'extrémité d'un axe (15) entraîné par l'organe moteur qui comporte un levier (16) rappelé élastiquement sur deux butées (18) solidaires en rotation de l'axe (15) d'entraînement du barreau (20) et formant chacune une surface de came susceptible de venir en appui sur un levier sollicité par un ressort (17) pour repousser le second doigt (20a, 20b) en position active, lorsque la butée de retenue (23) est effacée par le premier doigt (22).

5.- Dispositif selon les revendications 1 à 4, caractérisé en ce que les premier et second doigts sont confondus en un doigt unique (32) porté par un axe de rotation (33) sur lequel, d'une part il est articulé autour d'un axe de basculement (34) perpendiculaire à cet axe de rotation (33) et, d'autre part est monté un bras d'accouplement (35) opposé au doigt unique (32) et dont un ergot d'extrémité (36) coulisse dans la rainure radiale (37) d'un disque (38) tournant autour d'un axe parallèle à l'axe de rotation (33) du doigt unique (32), et comportant un maneton d'entraînement (39) sur lequel vient en appui un bras (40) sollicité par un organe élastique (41) pour constituer un organe d'entraînement en rotation du disque (38) et en ce qu'il comporte une butée de retenue (43) sur laquelle est susceptible de venir en appui le doigt unique (32) repoussé par l'ergot d'extrémité (36) sollicité par la rotation du disque (38) tant que le doigt (32) n'est pas pivoté autour de l'axe (34) de basculement par le lien (4).

6.- Dispositif selon la revendication 5, caractérisé en ce que la butée de retenue (43) est montée de façon élastique de manière à s'effacer partiellement sous l'action du brin vertical (4b) du lien (4) sur le doigt (32), la force élastique de rappel de ladite butée (43) étant cependant supérieure à la force motrice développée par le moteur à accumulation (38, 39, 40, 41) dans la position d'immobilisation du disque (38) par la butée de retenue (43).

7.- Dispositif selon la revendication 1, caractérisé en ce que l'organe moteur est constitué par un moteur alimenté par une source d'énergie extérieure, le premier doigt (12) étant relié à un circuit de commande de ce moteur apte à placer le second doigt (20a, 20b) en position active, alors que l'escamotage du second doigt est assuré par le lien (4) au passage du brin vertical (4b) de ce dernier.

8.- Dispositif selon les revendications 1 à 7, caractérisé en ce que l'émetteur de signal (26, 27) coopère avec un détecteur (12) de l'avancement de la balle (8) dans la presse.

9.- Dispositif selon la revendication 1, caractérisé en ce que l'organe moteur est constitué par une liaison mécanique du premier doigt (22) et du second doigt (20) par l'intermédiaire d'un organe d'accouplement constitué de deux bras (51, 52) respectivement solidaires de l'axe de transmission correspondant (21, 15) du premier et du second doigts et en appui l'un sur l'autre.

10.- Dispositif selon la revendication 9, caractérisé en ce que le second doigt (20) est porté par un axe tournant (15) accouplé au premier doigt (22) par l'organe d'accouplement (51, 52) et soumis à l'action d'un organe de rappel (50) tendant à le rappeler en position escamotée par une rotation inverse de celles qu'il subit lors de son entraînement par le lien (4a) et de son entraînement par le premier doit (22) et en ce que l'organe de rappel (50) est susceptible d'être neutralisé par une butée (58) de retenue de l'axe (15) et amené en position active par le déplacement du premier doigt (22) à la fin de sa course d'entraînement du second doigt (20).

Fig.1

Fig.2

Fig.3

Fig.4

Fig:5

Fig:6

*Fig. 7*

*Fig. 8*

*Fig. 9*

Fig:10

Fig:11

EP 0 342 086 A1

Fig. 12

Fig. 13

Fig. 14

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| Y | US-A-4196661 (HESTON CORP) <br> * colonne 2, ligne 25 - colonne 4, ligne 53; figures 1, 2 * | 1 | A01F15/14 |
| A | | 2 | |
| Y | EP-A-40970 (GOSS) <br> * page 5, ligne 23 - page 16, ligne 7; figures 1-6 * | 1 | |
| A | | 7, 8 | |
| X,P | US-A-4753463 (STROSSER) <br> * colonne 2, ligne 7 - colonne 6, ligne 9; figures 1-4b * | 1, 7 | |
| X,P | EP-A-286900 (HESSTON) <br> * colonne 4 - colonne 9; figures 1-10 * | 1, 7, 8 | |

DOMAINES TECHNIQUES
RECHERCHES (Int. Cl.4 )

A01F

Le présent rapport a été établi pour toutes les revendications

| Lieu de la recherche | Date d'achèvement de la recherche | Examinateur |
|---|---|---|
| LA HAYE | 17 JUILLET 1989 | VERMANDER R.H. |

EPO FORM 1503 03.82 (P0402)